Europäisches Patentamt

(19) European Patent Office

Office européen des brevets

(11) Publication number: **0 029 316**
**B2**

(12) # NEW EUROPEAN PATENT SPECIFICATION

(45) Date of publication of the new patent specification:
24.06.87

(51) Int. Cl.⁴: **C 08 L 27/08,** B 65 D 65/38

(21) Application number: **80303873.6**

(22) Date of filing: **30.10.80**

(54) Vinylidene chloride copolymer resin composition, packaging film prepared therefrom and food packages using the film.

(30) Priority: **09.11.79 JP 145106/79**

(43) Date of publication of application:
**27.05.81 Bulletin 81/21**

(45) Publication of the grant of the patent:
**16.02.83 Bulletin 83/7**

(45) Mention of the opposition decision:
**24.06.87 Bulletin 87/26**

(84) Designated Contracting States:
**AT CH DE FR IT LI NL SE**

(56) References cited:
**FR - A - 1 445 541**
**FR - A - 2 364 240**
**GB - A - 1 537 454**
**JP - A - 75 136 363**
**US - A - 3 891 598**
**US - A - 4 144 289**

**Chemical abstracts, 84, 45498u (1976)**

(73) Proprietor: **KUREHA KAGAKU KOGYO KABUSHIKI KAISHA, 9-11 Horidome-cho 1-chome Nihonbashi Chuo-ku, Tokyo (JP)**

(72) Inventor: **Hoshino, Mitsuru, 148-2 Harada Nishiki-machi, Iwaki-shi Fukushima-ken (JP)**
Inventor: **Yusa, Haruhiko, 80-3 Takenohana Nishiki-machi, Iwaki-shi Fukushima-ken (JP)**

(74) Representative: **Arthur, Bryan Edward, Withers & Rogers 4 Dyer's Buildings Holborn, London EC1N 2JT (GB)**

## Description

The present invention concerns a resin composition comprising (A) a vinylidene chloride copolymer which comprises not less than 60% by weight of vinylidene chloride units and (B) a copolymer of a monomer having at least one carboxyl group, a film prepared therefrom and a food package comprising a food packed within the film.

Films comprising a vinylidene chloride copolymer are useful for packing meat products because of the extremely small permeability of the films to gaseous oxygen and to water vapour. However, depending on the kind and the degree of freshness of the raw meat stuff to be packed, the adhesion of the films to the contents packed within the films is not always sufficient. This results in the separation of meat juice from the meat and, therefore, reduces the commercial value of the packed meat and also reduces the resistance of the package to bacterial contamination. Accordingly, the development of films having excellent adhesiveness to meat products has been desired.

It has been known to improve the adhesion of films made of a resin of vinylidene cloride copolymer by introducing carboxyl groups into the vinylidene chloride copolymer. The carboxyl groups are considered to raise the water-retaining property of protein in the meat and also the adhesion of the meat to the film. For instance, according to Japanese Patent Publication No. 14400/69, vinylidene chloride is copolymerized with vinyl chloride and an unsaturated organic acid or its derivative having at least one carboxyl group and being copolymerizable with vinylidene chloride and vinyl chloride to obtain a terpolymer. Japanese Patent Publication No. 94858/74 describes mixing a homopolymer or copolymer of a monomer having one or more carboxyl group per molecule, or a salt thereof, with a vinylidene chloride copolymer.

However, each of these methods has defects. The thermal stability of the resin produced according to the method of Japanese Patent Publication No. 14400/69 is insufficient. Therefore, a large amount of degraded resin exudes from the extruder which is used to process the resin into films. This increases the frequency with which the extruder has to be cleaned and reduces productivity. Although the thermal stability of the resin mixture of Japanese Patent Publication No. 94858/74 is improved, a uniform dispersion of the homopolymer or copolymer of an unsaturated organic acid in the vinylidene chloride copolymer is hardly obtainable since the homopolymer or copolymer of the unsaturated organic acid is generally poor in compatibility with the vinylidene chloride copolymer. Therefore, noticeable formation of fish eyes is observed in the resulting films and the transparency of the films is impaired.

It has now been found it is possible to prepare packaging films with fewer fish eyes and which possess excellent transparency and thermal stability from a resin composition by incorporating a copolymer of an alkyl methacrylate and of a monomer which is copolymerizable with the alkyl methacrylate and which has at least one carboxyl group into a vinylidene chloride copolymer which comprises not less than 60% by weight of vinylidene chloride units in such an amount as to make the content of units derived from the monomer having the carboxyl group from 0.01 to 5% by weight of the resin composition.

Accordingly, the present invention provides a resin composition comprising (A) a vinylidene chloride copolymer which comprises not less than 60% by weight of vinylidene chloride units and (B) a copolymer comprising (i) 60 to 90% by weight of alkyl methacrylate units or of alkyl methacrylate units and units of another monomer copolymerizable with the monomer of (ii) and (ii) 10 to 40% by weight of units of a monomer which is copolymerizable with said alkyl methacrylate and which has at least one carboxyl group in its molecule, the copolymer (B) being present in the resin composition in such an amount that the content of said units (ii) is from 0.01 to 5% the weight of the resin composition.

In the present invention a copolymer (B) produced by copolymerizing a monomer having at least one carboxyl group with an alkyl methacrylate is incorporated with a copolymer of vinylidene chloride (A) to enhance the water-retaining property and adhesion of the resulting films to meat products. The alkyl methacrylate copolymer (B) has a good compatibility with vinylidene chloride copolymers. By adding the alkyl methacrylate copolymer to vinylidene chloride copolymers, the defects of conventional packaging films made of vinylidene chloride copolymers, such as low thermal stability, formation of fish eyes and poor transparency, can be overcome. The films of the invention can be used to package foods such as meat products, for example fish meat ham and sausage and animal meat ham and sausage.

If copolymer (B) contains less than 50% by weight of the alkyl methacrylate, its compatibility with the vinylidene chloride copolymer (A) is poor. Packaging films made of the resulting composition are apt to form fish eyes and the transparency of the film is impaired. On the other hand, if the content of alkyl methacrylate is more than 99% by weight of the copolymer (B) the content of carboxyl groups in the copolymer is so small that the amount of the copolymer which has to be added to the vinylidene chloride copolymer must be increased to obtain good adhesion to a meat product. The increased amount of the copolymer (B) is liable to impair other properties of the film processed from the resin composition of the invention.

The copolymer (B) may be a random copolymer, or it may be a graft copolymer for the purpose of further improving compatibility with the vinylidene chloride copolymer. In the case of a graft copolymer the monomer having carboxyl groups may be in the backbone chain of the copolymer or in a branch chain. However, it is preferably contained in the backbone chain for the purpose of improving the compatibility of the copolymer. The most preferred copolymers, are those obtained by polymerizing an alkyl methacrylate in the presence of a copolymer of an alkl methacrylate and a monomer having at least one carboxyl group. The thus obtained graft copolymer has higher compatibility with the vinylidene chloride copolymer because the particles of the graft copolymer are covered with poly(alkyl methacrylate). Even in the case of a graft copolymer, the weight ratio of alkyl methacrylate units to the monomeric units having one or more carboxylic group is (60 to 90/10 to 40).

There are no particular restirctions on the alkyl methacrylate constituting the copolymer (B). However alkyl methacrylates having 1 to 8 carbon atoms in their alkyl groups are preferable. For instance, the alkyl methacrylate may be a methyl, ethyl, propyl, butyl, pentyl, hexyl, heptyl or octyl methacrylate, including their isomers. Particularly preferred are methyl methacrylate, butyl methacrylate and the mixture of the two.

The methacrylate is used singly or a mixture of two or more species of the methacrylate can be employed. Alternatively, a part of the methacrylate may be substituted by another monomer copolymerizable with the monomer having at least one carboxyl group. This other monomer may be an aromatic vinyl compound, for instance styrene, an alkyl acrylate or vinyl acetate.

The monomer which is copolymerizable with the alkyl methacrylate and which has at least one carboxyl group in its molecule includes unsaturated mono-, di-, tri- or polycarboxylic acids. It is preferable that the total number of carbon atoms in the acid is from 3 to 12, or a part of the carboxyl groups is esterified with an alkyl group of 1 to 12 carbon atoms. Such monomer is exemplified by acrylic acid, methacrylic acid, ethacrylic acid (alpha-ethylacrylic acid), itaconic acid, maleic acid, aconitic acid, and partial alkyl esters of these unsaturated polycarboxylic acids such as their methyl, ethyl, propyl, butyl, octyl and lauryl esters. Particularly preferred is monobutyl itaconate. A single monomer or a mixture of two or more monomers can be used.

As a method for producing the copolymer (B) comprising the above-mentioned monomers, emulsion polymerization, suspension polymerization or solution polymerization may be employed. In addition, conventional chain-transfer agents may be utilized in the polymerization.

The copolymer (B) is incorporated in the vinylidene chloride copolymer (A) in such an amount that the monomeric component having carboxylic group(s) occupies 0.01 to 5% by weight, preferably 0.1 to 3% by weight, more preferably 0.5 to 1.5% by weight, of the resulting mixture of the copolymers. Where the amount of the monomer is smaller than 0.01% by weight, an improvement in the adhesiveness of the film to a meat product is not exhibited. On the other hand, where the amount is larger than 5% by weight, not only is the adhesiveness to the meat product no more improved but also there is a danger of impairing the other properties of films made from such a mixture of copolymers, together with increased production cost.

The vinylidene chloride copolymer (A) is a copolymer which comprises not less than 60% by weight of vinylidene chloride units and not more than 40% by weight of units of one or more monomers which are copolymerizable with vinylidene chloride, e.g. vinyl chloride, acrylates styrene and vinyl acetate. Depending on the circumstances, ABS resin (terpolymer of acrylonitrile, butadiene and styrene), MBS resin (terpolymer of methyl methacrylate, butadiene and styrene), copolymer of ethylene and vinyl acetate or other polymers may be mixed with the copolymer (A) according to conventional methods for the purpose of providing impact strength to the film or improving the processability of the resin composition.

The films according to the present invention for packing food products such as meat products are easily prepared by following the conventional inflation process after melt-extruding the resin composition which can incorporate plasticizers and stabilizers according to need. The thickness of the film is usually $2 \times 10^{-5}$ to $10^{-4}$ m (20–100 μm), preferably $3 \times 10^{-5}$ to $7 \times 10^{-5}$ m (30–70 μm).

The following examples illustrate the present invention. In these examples, all parts or percentages are based on weight, unless otherwise specified.

The adhesiveness of a film to a meat product is evaluated, following the criteria mentioned below, on the state of a packed film prepared by filing a tube-like film made of a resin composition comprising a vinylidene chloride copolymer with a mixture of a kneaded product comprising a kneaded meat of pollachium virens as the main component, lard, starch, water and common salt, and boiling the package for 30 min at 90°C as it is, and after cutting open the film:

| States | Marks |
|---|---|
| The contents rotate in the tubular casing because meat juice has separated from the packed meat product | 0 |
| The contents do not move though the meat juice appears on the surface of the meat product as a very thin layer | 1 |
| The cut-open film of the casing is exfoliated by gravity easily | 2 |
| The cut-open film of the casing is exfoliated by gravity slowly | 3 |
| The cut-open film of the casing is not exfoliated by gravity; however, the meat scarcely adheres to it | 4 |
| When the film is removed from the packed meat product, meat adheres to about 10% of the surface of the film | 5 |
| When the film is removed from the packed meat product, meat adheres to about 30% of the surface of the film | 6 |

In such a case, the meat adheres to about 50% of the surface of the film 7
In such a case, the meat adheres to about 70% of the surface of the film 8
In such a case, the meat adheres to about 90% of the surface of the film 9
In such a case, the meat adheres to the whole surface of the film 10

Examples 1 to 3

The monomers and agents for polymerization below were charged into a $5 \times 10^{-4}$ m³ (500 ml) autoclave. The contents of the autoclave were heated for 17 hours at 50°C while agitating in an atmosphere of gaseous nitrogen to carry out polymerization:

| | Parts |
|---|---|
| methyl methacrylate: | 22 |
| butyl methacrylate: | 60 |
| monobutyl itaconate: | 18 |
| n-octylmercaptan: | 1 |
| potassium persulfate | 0.2 |
| sodium hydrogen sulfit: | 0.025 |
| sodium dodecylbenzenesulfonate: | 0.9 |
| de-ionized water: | 300 |

The thus obtained latex was salted out by sodium chloride. The separated copolymer was filtered, washed with water and dried. The yield of copolymer was about 100%.

The resulting copolymer was added to a vinylidene chloride copolymer which was prepared by conventional suspension polymerization of 80% of vinylidene chloride and 20% vinyl chloride so that the content of monobutyl itaconate in the copolymer mixtures was 0.1% (example 1), 0.5% (example 2) and 1.0% (example 3), respectively. 4 parts of dibutyl sebacate, 2.5 parts of tributyl acetylcitrate and 2 parts of epoxy-octyl stearate were mixed with100 parts of each of the thus obtained copolymer mixtures. After melt-extruding the thus prepared compositions, films $4 \times 10^{-5}$ m (40 μm) in thickness were prepared by inflation. The adhesiveness of the films to the meat product was evaluated after processing these films into tubular form and filling the tubular casings with kneaded meat products. The results are shown in table 1. The results of comparative example 1 also shown in table 1 were obtained using a film prepared from a vinylide chloride copolymer consisting of 80% of vinylidene chloride units and 20% of vinyl chloride units.

Table I

| Example | Content of monobutyl itaconate in the resin composition (% wt.) | Adhesiveness of the film to meats with qualities[1] of | | | | Look of the film | |
|---|---|---|---|---|---|---|---|
| | | A | B | C | D | fish eye | transparency |
| 1 | 0.1 | 10 | 9 | 7 | 6 | substantially not observed | excellent |
| 2 | 0.5 | 10 | 10 | 9 | 9 | substantially not observed | excellent |
| 3 | 1.0 | 10 | 10 | 10 | 10 | substantially not observed | excellent |
| Comparative Example 1 | 0 | 10 | 3 | 0 | 0 | substantially not observed | excellent |

1) Note: Quality of the meat was adjusted only by changing the amount of lard admixed with the meat. The amounts A to D of lard are as follows:
A: 15%, B: 39%, C: 47%, D: 51%.

As is clearly seen in table 1, by changing the ratio of the copolymer containing carboxyl groups to the vinylidene chloride copolymer, films prepared from the mixture of copolymers show a favorable adhesiveness to meat products of various qualities and exhibit a favorable look.

Example 4

Another polymerization was carried out in the same autoclave and in the same manner as in examples 1 to 3 except for charging the following substances into the autoclave instead of those used in examples 1 to 3:

| | Parts |
|---|---|
| butyl methacrylate: | 68 |
| monobutyl itaconate: | 17 |
| n-octylmercaptan: | 0.85 |
| potassium persulfate: | 0.17 |
| sodium hydrogen sulfite: | 0.021 |
| sodium dodecylbenzenesulfonate: | 0.9 |
| de-ionized water: | 300 |

After polymerization was completed, the following substances were added to the thus obtained latex. An after-polymerization was carried out by heating at 50°C for 17 hours under agitation and in an atmosphere of gaseous nitrogen:

|  | Parts |
|---|---|
| methyl methacrylate: | 11 |
| butyl methacrylate: | 4 |
| possium persulfate: | 0.03 |
| sodium hydrogen sulfite: | 0.0036 |

By processing the thus obtained copolymer in the same manner as in examples 1 to 3, a finished graft copolymer was obtained in a yield of about 100%.

Comparative example 2

A batch of copolymerization was carried out in the same manner as in example 4 except for using 15 parts of butyl methacrylate and 70 parts of monobutyl itaconate. The weight ratio of the monomers was outside the range required for the present invention. A copolymer was obtained in a yield of about 100%.

Comparative example 3

A terpolymer was obtained from the monomeric mixture consisting of 87 parts of vinylidene chloride, 13 parts of vinyl chloride and 5 parts of monobutyl itaconate according to a conventional suspension polymerization in a yield of 90%. The content of monobutyl itaconate unit in the thus obtained terpolymer was 5%.

In the same manner as in examples 1 to 3, each of the copolymers obtained in examples 4 and comparative examples 2 and 3 was mixed with the vinylidene chloride copolymer so as to make the content of monobutyl itaconate in the mixture of copolymers 0.5%. After preparing films from the thus obtained compositions, the adhesiveness of the films was evaluated. The thermal stability of the films was evaluated by the period of time which elapsed before the film yellowed in an aging tester at 150°C. The results are shown in table 2.

Table 2

| Example | Carboxyl group-*<br>containing copolymer<br>(part by weight) | Adhesiveness<br>to meat of<br>quality C | Look of casing film | | Thermal<br>stability<br>at 150°C (time<br>required for |
|---|---|---|---|---|---|
| | | | fish eye | transparency | yellowing, min) |
| 4 | BMA/MBI ← MMA/BMA<br>68/17  11/4 | 9 | not substantially observed | excellent | 70 |
| Comparative example 2 | BMA/MBI MMA/BMA<br>15/70  11/4 | 6 | numerous | opaque | 70 |
| Comparative example 3 | Terpolymer of<br>VDC/VC/MBI | 9 | not substantially observed | excellent | 50 |
| Comparative example 1 | not-used | 0 | not substantially observed | excellent | 70 |

* Note: BMA means butyl methacrylate;
   MBI means monobutyl itaconate;
   MMA means methyl methacrylate;
   VDC means vinylidene chloride, and
   VC means vinyl chloride.

As is seen in table 2, the film of example 4 exhibits a more favorable adhesiveness to meat product, a more excellent look and a better thermal stability than those of comparative examples 1 to 3.

Example 5

The following substances were charged into a $5 \times 10^{-4}$ m³ (500 ml) autoclave, polymerization was carried out while agitating under a gaseous nitrogen atmosphere at 45°C for 10 hours. After further charging 0.085 part of potassium persulfate and 0.0105 part of sodium hydrogen sulfite into the autoclave polymerization was carried out for another 10 hours:

|  | Parts |
|---|---|
| butyl methacrylate: | 75 |
| acrylic acid: | 10 |
| n-octylmercaptan: | 0.85 |
| potassium persulfate: | 0.17 |
| sodium hydrogen sulfite: | 0.021 |
| sodium dodecylbenzenesulfonate: | 0.9 |
| de-ionized water: | 300 |

Next, the following substances were added to the thus formed copolymer latex. Polymerization was carried out under a gaseous nitrogen atmosphere at 50°C for a further 17 hours while agitating:

|  | Parts |
| --- | --- |
| methyl methacrylate: | 11 |
| butyl methacrylate: | 4 |
| potassium persulfate: | 0.03 |
| sodium hydrogen sulfite: | 0.0036 |

A graft polymer was then obtained by treatment as in examples 1 to 3 in a yield of about 100%. This copolymer was incorporated into the vinylidene chloride copolymer employed in examples 1 to 3 so as to make the content of acrylic acid units in the resulting mixture 0.5%. A film prepared from the mixture of copolymers was evaluated for its adhesiveness. The results are shown in table 3.

Comparative example 4

A composition was prepared by mixing a finely powdered polyacrylic acid (AC-20LP [Trade Name], supplied by Nippon Junyaku Co., Ltd.) to the vinylidene chloride copolymer employed in examples 1 to 3 in an amount of 0.5% of the resulting mixture. A film was prepared from this mixture. The adhesiveness of the film to a meat product was evaluated. The results are also shown in table 3.

Table 3

| Example | Carboxyl group-containing copolymer (part by weight) | Adhesiveness to meat of quality C | Look of casing film | |
| --- | --- | --- | --- | --- |
|  |  |  | fish eye | transparency |
| 5 | BMA/AA[1] ← MMA/BMA[2] 75/10        11/4 | 9 | not substantially observed | transparent |
| Comparative example 4 | polyacrylic acid | 4 | remarkably numerous | opaque |

Notes: 1) BMA means butyl methacrylate, AA means acrylic acid, and
2) MMA means methyl methacrylate.

As is seen in table 3, the film of example 5 showed a good adhesiveness to the meat product as well as an excellent look, whereas the film prepared from the vinylidene chloride copolymer to which polyacrylic acid had been added exhibited an impaired look having numerous fish eyes and opacity as well as an impaired adhesiveness.

Examples 6 to 11

The dispersibility of the graft copolymer obtained by after-polymerizing an alkyl methacrylate to a copolymer containing carboxyl groups was examined as follows:

A graft copolymer is prepared following the same manner as in example 4 by after-polymerizing a monomeric mixture comprising 11 parts of methyl methacrylate and 4 parts of butyl methacrylate in the presence of 85 parts of a copolymer comprising 60 parts of butyl methacrylate units and 40 parts of monobutyl itaconate units. This graft copolymer was compounded with the vinylidene chloride copolymer employed in examples 1 to 3 so as to give three compositions respectively containing 0.5, 1.0 and 2.0% of monobutyl itaconate units based on the composition (examples 6, 7 and 8, respectively). These three compositions were respectively processed to form films of thickness of $4 \times 10^{-5}$ m (40 µm). The look of each film was examined.

The above mentioned copolymer comprising 60 parts of butyl methacrylate units and 40 parts of monobutyl itaconate units was compounded with the vinylidene chloride copolymer in examples 1 to 3 so as to give three compositions respectively containing 0.5, 1.0 and 2.0% of the mixture composition of monobutyl itaconate units (examples 9, 10 and 11 respectively). Films $4 \times 10^{-10}$ m (40 µm) in thickness were prepared from these three compositions and their look was examined. The results are shown in table 4.

Table 4

| Example | Carboxyl group-[1] containing copolymer (part by weight) | Amount of monobutyl itaconate (% wt.) | Look of film casing | |
| --- | --- | --- | --- | --- |
|  |  |  | fish eye | transparency |
| 6 | BMA/MBI ← MMA/BMA 51/34        11/4 | 0.5 | substantially not observed | excellent |
| 7 | same as above | 1.0 | substantially not observed | excellent |
| 8 | same as above | 2.0 | substantially not observed | excellent |

Table 4 (continued)

| Example | Carboxyl group [1] containing copolymer (part by weight) | Amount of monobutyl itaconate (% wt.) | Look of film casing | |
|---|---|---|---|---|
| | | | fish eye | transparency |
| 9 | BMA/MBI 60/40 | 0.5 | substantially not observed | excellent |
| 10 | same as above | 1.0 | substantially not observed | excellent |
| 11 | same as above | 2.0 | present, however in small number | whitened a little |

Note: 1) BMA/MBI ← MMA/BMA means a copolymer comprising
51/34     11/4
51 parts of butyl methacrylate and 34 parts of monobutyl itaconate grafted with a monomeric mixture comprising 11 parts of methyl methacrylate and 4 parts of butyl methacrylate.
BMA/MBI means a copolymer comprising 60 parts
60/40
of butyl methacrylate and 40 parts of monobutyl itaconate.

As is seen in table 4, the graft copolymer obtained by after-polymerization of alkyl methacrylates in the presence of a copolymer containing carboxyl group(s) is more easily and effectively dispersible into the vinylidene chloride copolymer than the other copolymer having carboxyl group(s).

**Claims**

1. A resin composition for food packaging film comprising (A) a vinylidene chloride copolymer which comprises not less than 60% by weight of vinylidene chloride units and (B) a copolymer of a monomer having at least one carboxyl group, characterized in that the copolymer (B) comprises (i) 60 to 90% by weight of alkyl methacrylate units or of alkyl methacrylate units and units of another monomer copolymerizable with the monomer of (ii) and (ii) 40 to 10% by weight of units of a monomer which is copolymerizable with said alkyl methacrylate and which has at least one carboxyl group in its molecule, and in that the copolymer (B) is present in the resin composition in such an amount that the content of said units (ii) is from 0.01 to 5% of the weight of the resin composition.

2. A resin composition according to claim 1, characterized in that said copolymer (B) is a graft copolymer.

3. A resin composition according to claim 2, characterized in that said copolymer (B) is a graft copolymer produced by graft polymerization of an alkyl methacrylate in he presence of a copolymer of an alkyl methacrylate and a monomer which is copolymerizable with said alkyl methacrylate and which has at least one carboxyl group in its molecule.

4. A resin composition according to any one of the preceding claims characterized in that from 0.1 to 3% of the weight of the resin composition is said units (ii).

5. A resin composition according to claim 4, characterized in that said copolymer (B) is incorporated in such an amount as to make the content of said monomer having carboxylic group(s) 0.5 to 1.5% by weight of said resin composition.

6. A resin composition according to any one of the preceding claims, characterized in that said alkyl methacrylate is at least one species of alkyl methacrylates having alkyl group of 1 to 8 carbon atoms.

7. A resin composition according to claim 6, characterized in that said alkyl methacrylate is methyl methacrylate, butyl methacrylate or a mixture thereof.

8. A resin composition according to any one of the preceding claims, characterized in that said monomer having at least one carboxyl group is selected from unsaturated mono-, di- and tricarboxylic acids having 3 to 12 total carbon atoms, partial alkyl esters of said unsaturated di- and tricarboxylic acids with an alkyl group of 1 to 12 carbon atoms and the mixtures thereof.

9. A resin composition according to claim 8, characterized in that said monomer having at least one carboxyl group is monobutyl itaconate.

10. Food packaging films characterized in that said films are prepared from said resin composition according to any one of the preceding claims.

**Patentansprüche**

1. Harzverbindung für Lebensmittel-Verpakkungsfolie mit (A) einem Vinylidenchloridcopolymer, das nicht weniger als 60 Gew.% Vinylidenchlorideinheiten enthält und (B) einem Copolymer eines Monomer mit zumindest einer Carboxylgruppe, dadurch gekennzeichnet, dass das Copolymer (B) enthält (i) 60 bis 90 Gew.% Alkylmethacrylateinheiten oder Alkylmethacrylateinheiten und Einheiten eines anderen Monomer, das mit dem Monomer (ii) copolymerisierbar ist und (ii) 40 bis 10 Gew.% Einheiten eines Monomer, das mit dem Alkylmethacrylat copolymerisierbar ist und in seinem Molekül zumindest eine Carboxylgruppe enthält, und dass das Copolymer (B) Teil einer Harzverbindung und dort in einer solchen Menge vorhanden ist, dass der Anteil der Einheiten gemäss (ii) 0,01 bis 5 Gew.% der Harzverbindung beträgt.

2. Harzverbindung nach Anspruch 1, dadurch gekennzeichnet, dass das Copolymer (B) ein Graftcopolymer ist.

3. Harzverbindung gemäss Anspruch 2, dadurch gekennzeichnet, dass das Copolymer (B) ein Graftcopolymer ist, das durch Graftpolymerisation eines Alkylmethacrylates in Gegenwart eines Copolymer eines Alkylmethacrylats und eines Monomer hergestellt ist, das mit dem Alkylmethacrylat copolymerisierbar ist und in seinem Molekül zumindest eine Carboxylgruppe enthält.

4. Harzverbindung nach einem der Ansprüche 1 bis 3, dadurch gekennzeichnet, dass 0,1 bis 3 Gew.% der Harzverbindung die Einheiten (ii) bildet.

5. Harzverbindung nach Anspruch 4, dadurch gekennzeichnet, dass das Copolymer (B) in einer Menge eingearbeitet ist, dass der Anteil des Monomer mit Carboxylgruppen 0,5 bis 1,5 Gew.% der Harzverbindung ist.

6. Harzverbindung nach einem der Ansprüche 1 bis 5, dadurch gekennzeichnet, dass das Alkylmethacrylat ein Methacrylat oder mehrere Methacrylate mit einer Alkylgruppe von einem bis zu acht Kohlenstoffatomen ist.

7. Harzverbindung nach Anspruch 6, dadurch gekennzeichnet, dass das Alkylmethacrylat Methylmethacrylat, Butylmethacrylat oder ein Gemisch davon ist.

8. Harzverbindung nach einem der Ansprüche 1 bis 7, dadurch gekennzeichnet, dass der Monomer mit zumindest einer Carboxylgruppe ausgewählt ist aus der Gruppe ungesättigter Mono-, Di- und Tricarbonsäuren mit drei bis zwölf Gesamtkohlenstoffatomen, Partialalkylester der ungesättigten Di- und Tricarbonsäuren mit von 1 bis 12 Kohlenstoffatomen in der Alkylgruppe und Gemische davon.

9. Harzverbindung nach Anspruch 8, dadurch gekennzeichnet, dass der Monomer mit zumindest einer Carboxylgruppe Monobutylitakonat ist.

10. Lebensmittelverpackungsfolien, dadurch gekennzeichnet, dass die Folien aus der Harzverbindung gemäss zumindest einem der vorstehenden Ansprüche hergestellt sind.

## Revendications

1. Composition de résine pour film pour conditionnement alimentaire comprenant:

(A) un copolymère de chlorure de vinylidène ne comprenant pas moins de 60% en poids d'unités de chlorure de vinylidène; et (B) un copolymère d'un monomère ayant au moins un groupe carboxyle, caractérisée en ce que le copolymère (B) comprend: (i) 60 à 90% en poids d'unités de méthacrylate d'alkyle ou d'unités de méthacrylate d'alkyle et d'unités d'un autre monomère copolymérisable avec le monomère de (ii); et (ii) 40 à 10% en poids d'unités d'un monomère qui est copolymérisable avec ce méthacrylate d'alkyle et qui comprend au moins un groupe carboxyle dans sa molécule, et en ce que le copolymère (B) est présent dans la composition de résine en une quantité telle que la teneur de ces unités (ii) représente de 0.01 à 5% du poids de la composition de résine.

2. Composition de résine selon la revendication 1, caractérisée en ce que le copolymère (B) est un copolymère greffé.

3. Composition de résine selon la revendication 2, caractérisée en ce que le copolymère (B) est un copolymère greffé produit par la polymérisation par greffage d'un méthacrylate d'alkyle en présence d'un copolymère d'un méthacrylate d'alkyle et d'un monomère qui est copolymérisable avec ce méthacrylate d'alkyle et qui comprend au moins un groupe carboxyle dans sa molécule.

4. Composition de résine selon l'une quelconque des revendications 1 à 3, caractérisée en ce que ces unités (ii) représentent 0,1 à 3% en poids du poids de la composition de résine.

5. Composition de résine selon la revendication 4, caractérisée en ce que ce polymère (B) y est incorporé en une quantité conduisant à une teneur pondérale en ledit monomère comprenant un ou des groupes carboxyliques dans la composition de résine de 0,5 à 1,5% en poids.

6. Composition de résine selon l'une quelconque des revendications 1 à 5, caractérisée en ce que ce méthacrylate d'alkyle est constitué d'un ou de plusieurs méthacrylates d'alkyle ayant un groupe alkyle contenant de 1 à 8 atomes de carbone.

7. Composition de résine selon la revendication 6, caractérisée en ce que le méthacrylate d'alkyle est du méthacrylate de méthyle, du méthacrylate de butyle ou un mélange de ceux-ci.

8. Composition de résine selon l'une quelconque des revendications 1 à 7, caractérisée en ce que le monomère comprenant au moins un groupe carboxyle est choisi parmi les acides insaturés mono-, di- et tricarboxyliques contenant au total de 3 à 12 atomes de carbone, des esters alkyliques partiels de ces acides insaturés di- et tricarboxyliques contenant de 1 à 12 atomes de carbone dans le groupe alkyle et leur mélange.

9. Composition de résine selon la revendication 8, caractérisée en ce que ce monomère ayant au moins un groupe carboxyle est de l'itaconate de monobutyle.

10. Films pour conditionnement caractérisé en ce qu'ils sont préparés à partir d'une composition de résine selon l'une quelconque des revendications précédentes.